# DEMANDE DE BREVET EUROPEEN

(11) **EP 0 875 413 A1**
(43) Date de publication de la demande: **04.11.1998**
(21) Numéro de dépôt: 98401002.5
(22) Date de dépôt: 24.04.1998
(51) Int. Cl.: B60K 20/08

(54) **Dispositif de commande par câbles d'une boîte de vitesses**

(30) Priorité: 30.04.1997 FR 9705343
(71) Demandeur: RENAULT, 92109 Boulogne-Billancourt (FR)
(72) Inventeur: Saint-Jean, Alain, 92290 Chatenay Malabry (FR); Valaise, Bernard, 75008 Paris (FR)

(57) **Abrégé**

L'invention propose un dispositif (10) du type comportant un levier (36) de changement de vitesse, articulé par rapport à un support pivotant (28), autour d'un axe transversal d'articulation (A2) sensiblement horizontal, du type dans lequel le support pivotant (28) agit directement sur un câble de transmission (44) par l'intermédiaire d'un bras (56) du support (28), et du type dans lequel le levier (36) agit sur un autre câble de transmission (46) par l'intermédiaire d'un basculeur (66) monté tournant autour d'un axe de rotation (A3) perpendiculaire à l'axe (Ai) de pivotement du support, caractérisé en ce que le basculeur (66) est monté tournant par rapport au bâti (14), et en ce que le levier (36) de changement de vitesse agit sur le basculeur (66) par l'intermédiaire d'une barre d'actionnement (82) dont l'extrémité arrière (84) est reliée au levier (36) et dont l'extrémité avant (80) est reliée au basculeur (66).

## Description

La présente invention concerne un dispositif de commande d'une boîte de vitesses de véhicule automobile.

L'invention concerne plus particulièrement un dispositif de commande tel que celui décrit et représenté dans le document EP-A-0.565.400.

Ce document décrit un dispositif de commande d'une boîte de vitesses de véhicule automobile, du type comportant un levier de changement de vitesse dont une extrémité supérieure est manoeuvrée par le conducteur selon deux directions sensiblement horizontales, respectivement longitudinale et transversale par rapport au véhicule et du type comportant un premier (passage) et un second (sélection) organe de transmission des mouvements du levier vers la boîte de vitesses dont les déplacements sont liés respectivement aux mouvements longitudinaux et transversaux du levier, du type dans lequel le dispositif comporte un support qui est monté pivotant, autour d'un axe longitudinal sensiblement horizontal, sur un bâti du dispositif solidaire de la caisse du véhicule, du type dans lequel le levier est articulé par rapport au support pivotant, autour d'un axe transversal d'articulation sensiblement horizontal, du type dans lequel le support pivotant agit directement sur le second organe de transmission par l'intermédiaire d'un bras du support dont une extrémité transversale est reliée à une extrémité libre de ce second organe, et du type dans lequel le levier de changement de vitesse agit sur une extrémité libre du premier organe de transmission par l'intermédiaire d'un organe monté tournant autour d'un axe de rotation perpendiculaire à l'axe de pivotement du support.

Un tel dispositif est notamment utilisé pour commander une boîte de vitesses à l'aide de deux câbles gainés.

Le dispositif a pour but de transmettre les mouvements de l'extrémité supérieure du levier de changement de vitesse, qui est agencé à l'intérieur de l'habitacle du véhicule, jusqu'à la boîte de vitesses de manière à permettre la sélection et l'engagement ou passage des différents rapports de vitesses.

Ce type de conception est plus particulièrement prévu pour être utilisé dans le cas d'un véhicule de type "monospace" dans lequel on est amené à agencer le levier de changement de vitesse sur le tableau de bord du véhicule, ou sur la traverse supérieure qui délimite l'habitacle vers l'avant, de manière à dégager entièrement le plancher du véhicule.

L'ensemble du dispositif de commande de la boîte de vitesses, qui est par exemple une structure mécano-soudée relativement lourde, se trouve alors sensiblement au niveau des genoux du conducteur et du passager et il est nécessaire qu'il soit particulièrement compact afin de ne pas nuire au confort des occupants et, en cas d'accident, présenter un risque minimum.

Outre la nécessité d'une grande compacité, il est souhaitable que les deux organes de transmission de mouvement, qui sont des organes allongés, de préférence des câbles mais aussi des tiges ou barres de commande, pour transmettre les mouvements jusqu'à la boîte de vitesses située dans le compartiment moteur avant ou arrière du véhicule, puissent occuper un volume réduit lors de leur parcours dans l'habitacle.

Dans le document mentionné précédemment, l'organe qui agit sur le premier organe de transmission de mouvement, pour le passage d'un rapport, est monté articulé sur le support pivotant et il s'étend longitudinalement vers l'avant dans l'habitacle, le câble de transmission de mouvement étant relié par une rotule à l'extrémité libre avant de cet organe.

Du fait de cette conception, les extrémités supérieures des câbles de transmission de mouvement sont éloignées l'une de l'autre et les deux câbles occupent un volume important par rapport au bâti du dispositif, l'un étant situé vers l'avant par rapport au levier de changement de vitesse et l'autre transversalement sur le côté.

De plus, le fait que l'organe soit monté tournant sur le support pivotant aboutit à une cinématique différente d'action sur le câble de passage des rapports en fonction de la ligne de rapports préalablement sélectionnée par pivotement du support par rapport au bâti.

L'invention a pour objet de proposer une conception d'un dispositif de commande qui remédie aux inconvénients qui viennent d'être mentionnés.

Dans ce but, l'invention propose un dispositif de commande du type mentionné précédemment, caractérisé en ce que ledit organe est un basculeur qui est monté tournant par rapport au bâti, et en ce que le levier de changement de vitesse agit sur le basculeur par l'intermédiaire d'une barre d'actionnement dont l'extrémité arrière est reliée au levier et dont l'extrémité avant est reliée au basculeur.

Selon d'autres caractéristiques de l'invention :
- les deux organes de transmission sont, au voisinage de leurs dites extrémités libres, orientés sensiblement verticalement, et leurs extrémités libres sont situées transversalement d'un même côté par rapport à un plan vertical passant par l'axe de pivotement du support ;
- le basculeur est monté tournant sur le bâti autour d'un axe transversal de rotation qui est sensiblement concourant avec l'axe de pivotement du support ;
- le basculeur comporte une branche d'actionnement qui s'étend longitudinalement vers l'arrière depuis l'axe de rotation du basculeur et dont l'extrémité libre est reliée à l'extrémité libre du premier organe de transmission ;
- le basculeur comporte une branche de commande qui s'étend sensiblement verticalement vers le haut à partir de l'axe de rotation du basculeur et dont l'extrémité supérieure libre est reliée à l'extrémité libre avant de la barre d'actionnement dont l'extrémité libre arrière est reliée au levier de changement de vitesse en un point situé verticalement entre l'axe d'articulation du levier sur le support pivotant et l'extrémité supérieure du levier de changement de vitesse ;
- le point de liaison de l'extrémité libre du second organe de transmission avec le bras du support est situé sensiblement sur l'axe transversal d'articulation du levier de changement de vitesse sur le support ;
- les deux extrémités avant et arrière de la barre d'actionnement sont reliées respectivement au basculeur et au levier de changement de vitesse par des articulations à rotule ;
- les extrémités libres des premier et second organes de transmission de mouvement sont reliées respectivement au basculeur et au bras du support pivotant par des articulations à rotule ;
- des mouvements transversaux du levier correspondent à la sélection d'une ligne de rapports de vitesse, et des mouvements longitudinaux du levier correspondent à un passage d'un rapport de vitesse ;
- les organes de transmission des mouvements du levier sont des câbles gainés, et les gaines de câble prennent appui contre une partie inférieure du bâti du dispositif ;
- le dispositif est du type dans lequel le bâti comporte une embase pour la fixation du dispositif sur la caisse du véhicule de manière que le levier de changement de vitesse s'étende sensiblement verticalement à l'intérieur de l'habitacle et de manière que les tronçons d'extrémités libres des deux organes de transmission de mouvement s'étendent sensiblement verticalement au niveau de l'embase.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective d'un dispositif de commande de boîte de vitesses conforme aux enseignements de l'invention ;
- la figure 2 est un schéma illustrant la grille de changement de vitesse associée à l'exemple de réalisation du dispositif de commande selon l'invention ;
- la figure 3 est une vue schématique latérale illustrant l'implantation du dispositif de commande selon l'invention dans l'habitacle d'un véhicule automobile ;
- les figures 4A à 4D sont des vues schématiques selon la flèche F4 de la figure 2, qui représente les quatre positions différentes de sélection du dispositif de commande ; et
- les figures 5 à 5C sont des vues schématiques, selon la flèche F5 de la figure 2, qui représentent trois positions différentes de passage du dispositif de commande.

Dans la description qui va suivre, ainsi que dans les revendications, on utilisera, pour situer les différentes pièces et composants dans l'espace et pour simplifier la description, les termes "horizontal", "vertical", "supérieur", "inférieur", "longitudinal" et "transversal" en référence aux figures sur lesquelles le dispositif de commande selon l'invention est représenté dans une position classique d'implantation à l'intérieur d'un véhicule.

Toutefois, sans sortir du cadre de l'invention, on pourra prévoir d'agencer et d'orienter le dispositif de commande dans l'habitacle d'une manière différente.

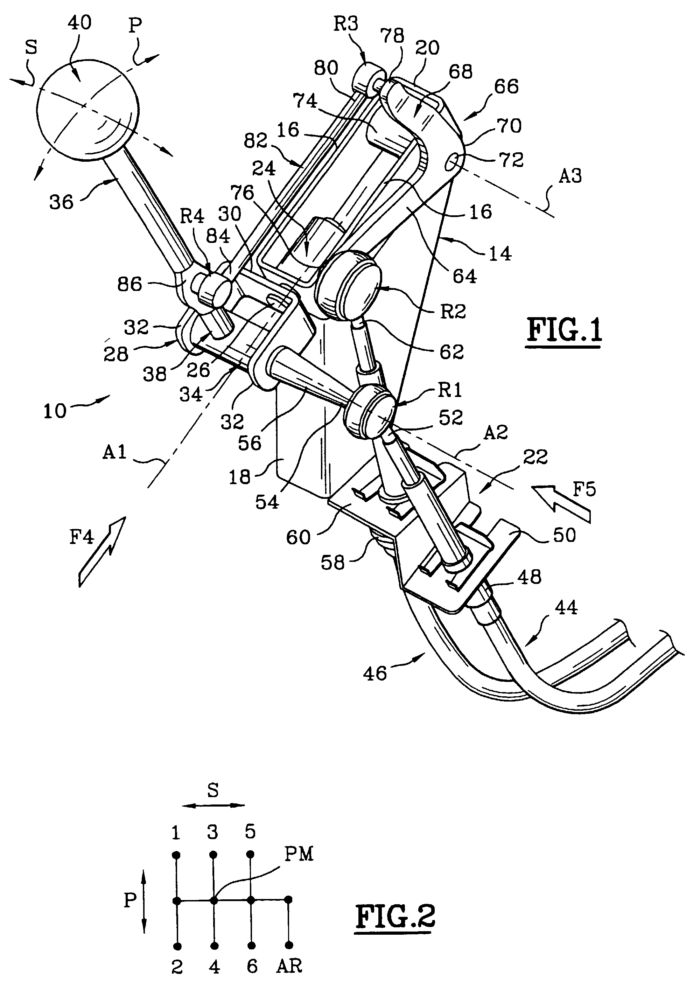

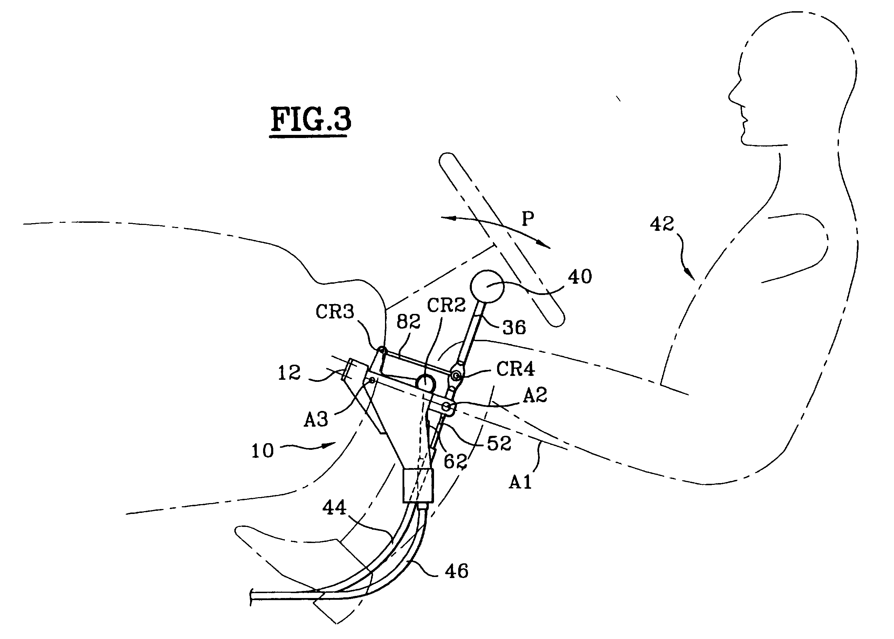

Aux figures 1 et 3, le dispositif de commande est illustré dans la position correspondant au point mort de la boîte de vitesses.

On a représenté aux figures un dispositif 10 de commande d'une boîte de vitesses (non représentée) qui est fixée sur un élément de structure de la caisse du véhicule qui est par exemple un élément de structure 12 appartenant au tableau de bord du véhicule et/ou qui est relié à une traverse supérieure de l'habitacle.

Le dispositif 10 est fixé par son bâti 14 qui est constitué pour l'essentiel par deux montants verticaux en forme de plaques parallèles 16 qui s'étendent parallèlement à un plan vertical médian PV du bâti 14 qui est d'orientation longitudinale dans le véhicule.

Les montants 16 sont reliés entre eux par une plaque verticale transversale arrière 18 qui s'étend sensiblement sur toute la hauteur des montants 16 et par une patte transversale avant 20 de hauteur réduite.

A son extrémité inférieure, le bâti 14 comporte une embase 22.

L'ensemble du bâti 14 est réalisé en construction mécano-soudée et l'embase 22 se présente sous la forme d'une tôle pliée et étagée qui s'étend transversalement vers la droite (en regardant vers l'avant du véhicule) à partir du montant vertical de droite 16.

Les zones du bâti 14 pour sa fixation sur une structure fixe du véhicule sont constitués essentiellement par les parties latérales dégagées des montants verticaux 16, d'orientation longitudinale, et par l'embase 22.

Le bâti 14 se présente sous la forme d'un corps creux dans lequel, à sa partie supérieure, est agencé un corps 24 de pivot tubulaire d'orientation longitudinale qui constitue un palier pour l'axe 26 de pivotement d'un support pivotant 28.

L'axe 26 s'étend longitudinalement à travers un trou formé dans la partie supérieure de la plaque transversale arrière 18 et son extrémité arrière est par exemple soudée sur le support 28.

Le support 28 est une chape en tôle pliée en forme de U dont la branche centrale 30 reçoit l'axe de pivotement et dont les branches parallèles 32 s'étendent longitudinalement vers l'arrière dans des plans sensiblement verticaux.

Le support 28 est ainsi monté pivotant par rapport au bâti 14, et donc par rapport à la caisse du véhicule, autour d'un axe de pivotement A1 qui est d'orientation longitudinale et sensiblement horizontal.

Le support 28 en U reçoit, entre ses branches 32, l'axe 34 d'articulation d'un levier 36 de changement de vitesse.

L'extrémité inférieure 38 du levier 36 est ainsi soudée sur l'axe 34, l'ensemble du levier 36 étant articulé sur le support pivotant 28 autour d'un axe géométrique A2 qui est d'orientation transversale et sensiblement horizontale dans l'habitacle du véhicule.

Les axes A1 et A2 sont perpendiculaires et concourants et leur intersection définit un autre instantané de rotation de levier 26 dont la position est fixe par rapport au bâti 14.

A son l'extrémité supérieure, le levier 36 comporte un pommeau 40 de changement de vitesse sur lequel le conducteur 42 peut agir manuellement.

Du fait de l'articulation du levier 36 autour de l'axe A2 sur un support 28 monté lui-même pivotant sur le bâti 14 autour de l'axe A1, le conducteur 42 peut manoeuvrer le pommeau 40, et donc le levier 36, selon une première direction longitudinale de passage P et selon une seconde direction transversale de sélection S.

La manoeuvre du levier 36 par le conducteur a pour but de transmettre à la boîte de vitesses des efforts de commande de la sélection et du passage, ou engagement, d'un rapport de vitesses déterminé.

A cet effet, le dispositif de commande 10 comporte deux organes de transmission de mouvement sur lesquels agit le levier 36 et qui sont reliés à la boîte de vitesses.

Dans le mode de réalisation illustré sur les figures, les deux organes de transmission de mouvement sont deux câbles gainés 44 et 46.

Le premier câble 44 permet de transmettre à la boîte de vitesses les ordres de sélection tandis que le second câble 46 permet de transmettre les ordres de passage d'un rapport.

L'extrémité libre 48 de la gaine du câble 44 prend appui sur une portion en vis-à-vis 50 de l'embase étagée et l'extrémité libre 52 du câble coulissant dans la gaine est reliée, par l'intermédiaire d'une articulation à rotule R1, à l'extrémité transversale libre 54 d'un bras 56 solidaire du support pivotant 28 et qui s'étend transversalement, vers la droite, depuis l'une des branches latérales 32 du support.

L'agencement géométrique du bras 56 est tel que le centre CR1 de la rotule R1 est situé sensiblement sur l'axe A2 d'articulation du levier 36.

L'extrémité libre 58 de la gaine du câble de passage 46 prend appui sur une portion en vis-à-vis 60 de l'embase étagée 22 et l'extrémité libre 62 du câble coulissant dans la gaine est reliée, par l'intermédiaire d'une articulation à rotule R2, à un basculeur 66.

Le basculeur 66 se présente sous la forme d'un levier coudé en L à deux branches 64 et 68 qui s'étendent toutes les deux dans un plan longitudinal et vertical du dispositif.

La branche 64 d'actionnement du câble de passage 46 s'étend sensiblement horizontalement vers l'arrière à partir de la portion centrale 70 du basculeur par laquelle ce dernier est monté tournant sur le bâti 14 autour d'un axe géométrique de rotation A3 qui est transversal, c'est-à-dire perpendiculaire à l'axe A1 de pivotement du support 28 et, dans l'exemple illustré sur les figures, concourant avec l'axe A1.

La branche verticale 68 de commande du basculeur 66 s'étend, à partir du coude centra 70, sensiblement verticalement vers le haut.

Le montage tournant du basculeur 66 est assuré par un axe ou pivot 72 qui est reçu à rotation dans un palier tubulaire 74 monté entre les faces internes des montants verticaux 16 au voisinage de la plaque transversale arrière 20 du bâti 14.

L'extrémité libre arrière 76 de la branche d'actionnement 64 du basculeur 66 est reliée à l'extrémité libre 62 du câble de passage 46 par une articulation à rotule R2, tandis que l'extrémité libre supérieure 78 de la branche verticale de commande 68 du basculeur 66 est reliée, par une articulation à rotule R3, à l'extrémité avant 80 d'une barre d'actionnement 82 dont l'extrémité arrière 84 est reliée, par une articulation à rotule R4, à la partie inférieure 86 du levier 36 de changement de vitesse.

D'une manière générale, la barre d'actionnement 82 selon une direction longitudinale sensiblement horizontale.

Dans la suite de la description, les centres géométriques des articulations à rotule R1 à R4 seront désignés par les références CR1 à CR4.

Le centre CR4 de la rotule R4 est situé sur le levier de changement de vitesse 36, entre le pommeau 40 et son axe A2 d'articulation sur le support 28.

Grâce à la conception selon l'invention dans laquelle le levier de changement de vitesse 36 agit sur le câble de passage 46 par l'intermédiaire d'un basculeur 66 monté tournant sur le bâti 14, constituant ainsi un renvoi de mouvement, les extrémités libres 52 et 62 des câbles de sélection 44 et de passage 46 peuvent être agencées à proximité l'une de l'autre en permettant ainsi de rapprocher les deux câbles et de les orienter sensiblement verticalement, dans le début de leur parcours dans l'habitacle, et notamment le long du bâti 14 jusqu'à l'embase 22, ainsi qu'à proximité du levier de changement de vitesse.

L'ensemble du dispositif de commande 10 est ainsi d'une grande compacité, sa conception permet de minimiser les dispersions de position de la commande dans l'habitacle et la réaction des efforts dans les différents paliers d'articulation est particulièrement réduite.

On décrira maintenant plus en détails la cinématique du dispositif de commande 10 en référence à la figure 2 qui est un schéma illustrant la grille de commande de changement de vitesse à quatre lignes, ou couloirs, de sélection et à deux positions longitudinales opposées de passage des rapports.

La position de point mort PM est indiquée sur la figure 2 et elle se situe au centre de la ligne correspondant à la sélection des troisième et quatrième rapports de marche avant.

Transversalement vers la gauche par rapport à cette ligne de sélection, la grille comporte le couloir de sélection des premier et deuxième rapports de marche avant tandis que, transversalement vers la droite, la grille comporte successivement le couloir de sélection des cinquième et sixième rapports de marche avant puis le couloir de sélection du rapport de marche arrière.

Une fois le couloir désiré sélectionné, une action longitudinale vers l'avant permet de sélectionner les premier, troisième et cinquième rapports de marche avant, tandis qu'une action longitudinale vers l'arrière permet de sélectionner les deuxième, quatrième et sixième rapports de marche avant ou la marche arrière.

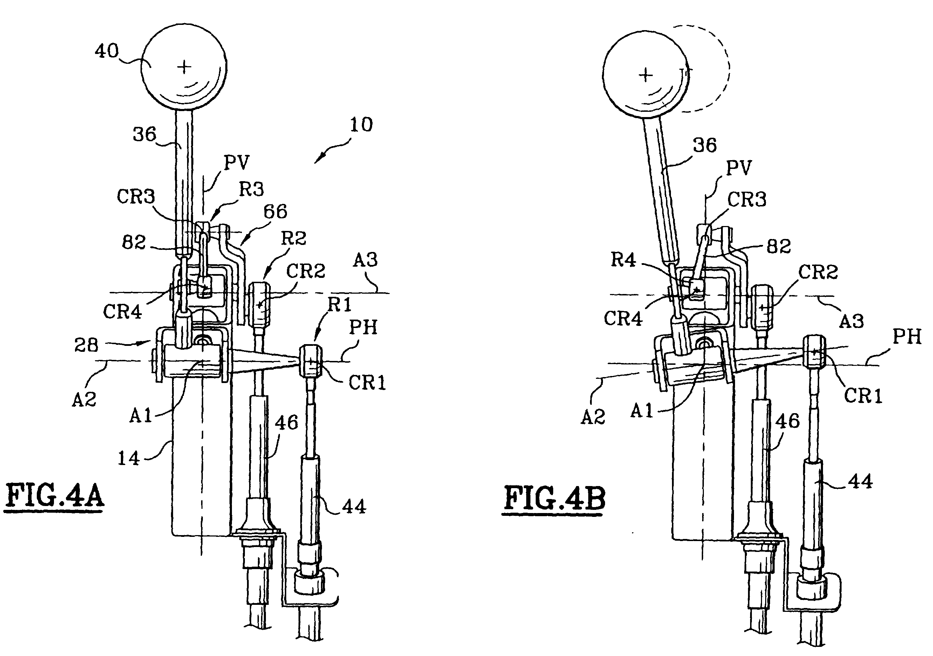

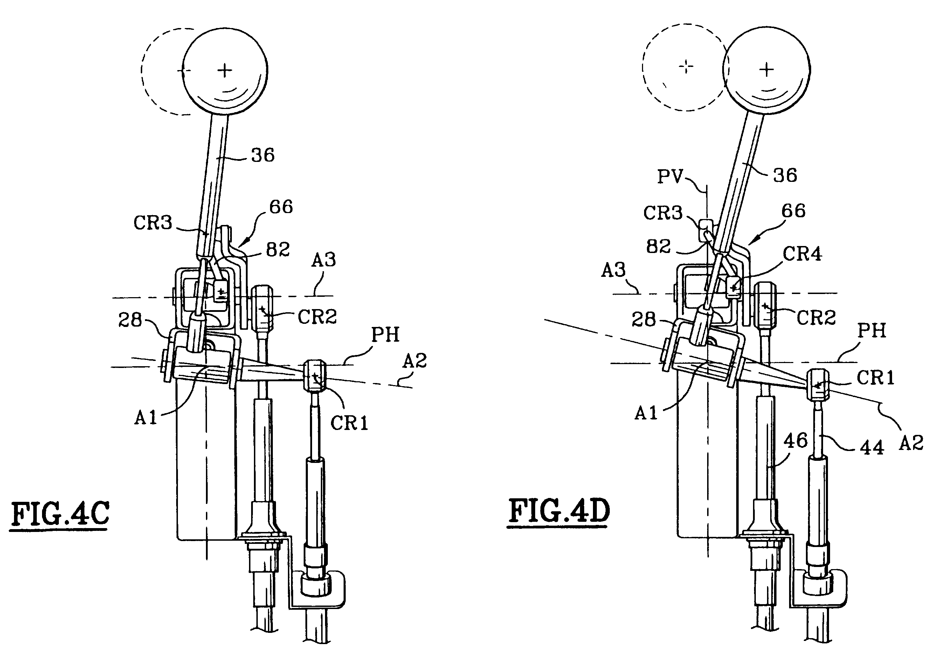

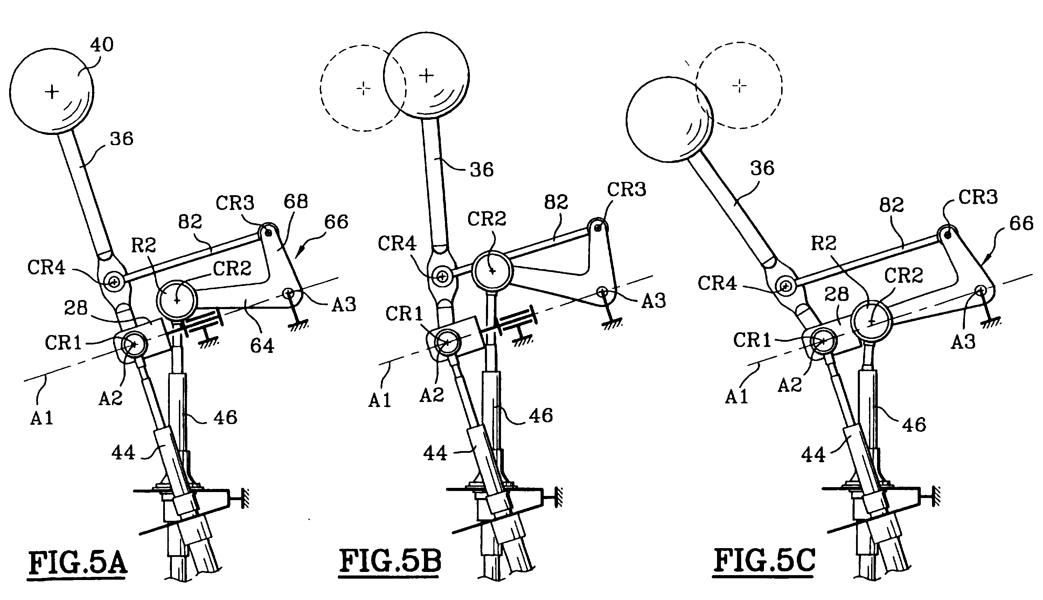

Dans la position de point mort, et comme on peut le voir aux figures 4A et 5A, la barre d'actionnement 82 s'étend sensiblement parallèlement à l'axe de pivotement A1 et le centre CR2 de la rotule R2 est situé verticalement au dessus de l'axe de pivotement A1.

La barre d'actionnement 82 s'étend par ailleurs dans le plan vertical médian PV passant par l'axe A1. On constate que le câble de passage 46, dans sa partie supérieure d'extrémité libre, s'étend dans un plan vertical parallèle au plan PV et tous les mouvements de ce câble, quel que soit le rapport sélectionné et engagé, s'effectuent dans ce plan vertical.

Il en est de même du câble de sélection 44 qui, aux approximations près dues à la rotation du centre CR1 autour de l'axe A1, se déplace toujours dans un même plan sensiblement vertical.

En partant de la position illustrée à la figure 4A, lorsque le conducteur désire sélectionner le couloir correspondant au premier et deuxième rapports de marche avant, il agit transversalement vers la gauche sur le pommeau 40 pour provoquer un pivotement du support 28 autour de l'axe A1 (dans le sens anti-horaire en considérant les figures) pour atteindre la position illustrée à la figure 4B.

Cette action a pour effet de faire pivoter la rotule R1, et donc son centre CR1, autour de l'axe A1 et de faire monter le centre CR1 par rapport à un plan horizontal de référence PH passant par l'intersection des axes A1 et A2.

Comme on le voit sur la figure 4B, le centre CR1 monte par rapport au plan horizontal PH, le levier 36 permettant ainsi d'appliquer un effort de traction sur le câble 44, et la barre d'actionnement 82 s'incline légèrement transversalement vers la gauche, c'est-à-dire que le centre CR4 de la rotule R4 se déplace vers la gauche, avec le levier 36, par rapport au plan vertical PV.

L'action de sélection qui vient d'être décrite est sans effet sur le câble de passage 46 car le centre CR3 de la rotule R3 ne s'est pas déplacée dans le plan vertical PV.

D'une manière symétrique, lorsque le conducteur désire sélectionner les couloirs correspondant aux troisième et quatrième rapports de marche avant (figure 4D) ou à la marche arrière (figure 4D), le conducteur fait pivoter le levier 36 autour de l'axe A1 dans le sens horaire en considérant les figures à partir de la position de point mort illustrée à la figure 4A.

Cette action transversale de sélection vers la droite, plus ou moins importante, a pour effet de faire descendre le centre CR1 par rapport au plan horizontal PH et de provoquer un effort de poussée sur le câble de sélection 44.

L'action de sélection est toujours sans effet sur le câble 46 car le centre CR3 ne se déplace pas dans le plan vertical PV.

Par contre, la barre de commande 82 se déplace transversalement vers la droite, c'est-à-dire que le centre CR4 de la rotule R4 se décale transversalement vers la droite par rapport au plan vertical PV.

On décrira maintenant les deux mouvements d'engagement ou de passage d'un rapport lorsqu'un couloir a été préalablement sélectionné.

Cette description sera faite en référence aux figures 5A à 5C.

A partir de la position de point mort illustrée à la figure 5A, le conducteur peut par exemple sélectionner le troisième rapport de marche avant en poussant longitudinalement le pommeau 40 vers l'avant, c'est-à-dire en provoquant une rotation dans le sens horaire, en considérant la figure 5A, du levier 36 autour de son l'axe d'articulation A2 pour atteindre la position illustrée à la figure 5B.

Cette rotation a pour effet de provoquer, grâce à la présence de la barre d'actionnement 82, une rotation correspondante dans le sens horaire, du basculeur 66 autour de son axe de rotation A3.

La rotation du basculeur 66 provoque une rotation du centre CR2 de la rotule R2, dans le sens horaire.

Ainsi, le centre CR2 monte par rapport au plan horizontal PH et le levier 36 permet d'appliquer un effort de traction au câble de passage 46.

Comme on peut le constater en comparant les figures 5A et 5B, l'axe A3 et les centres CR1, CR4 et CR3 constituent, dans le plan de la figure, un parallélogramme qui se déforme, dans un plan longitudinal vertical, en fonction de la position angulaire du levier de changement de vitesse 36 autour de l'axe A2 sur lequel est situé le centre de rotation CR1.

D'une manière similaire, et comme on peut le voir à la figure 5C, le conducteur, par exemple en vue de sélectionner le quatrième rapport de marche avant, peut tirer longitudinalement vers l'arrière le pommeau 40 et provoquer une rotation du levier 36, dans le sens anti-horaire en considérant les figures, autour de son axe A2.

Cette action provoque une rotation dans le sens anti-horaire du basculeur 66 et le centre CR2 de la rotule R2 descend par rapport au plan horizontal PH, c'est-à-dire que le levier 36 permet d'appliquer un effort de poussée au câble de sélection 46.

Les deux mouvements opposés de sélection illustrés aux figures 5B et 5C sont identiques du point de vue de la cinématique, quel que soit le couloir sélectionné, et n'ont été décrits en référence au couloir de point mort et de troisième et quatrième rapports de marche avant qu'à titre d'exemple.

La conception du dispositif de commande selon l'invention a en outre pour avantage de présenter une grande ergonomie, c'est-à-dire que, pour engager un rapport, le conducteur n'est amené à exercer que des efforts horizontaux vers l'avant ou vers l'arrière avec son bras sensiblement horizontal, c'est-à-dire qu'il exerce avec grand confort un effort parallèle à l'orientation de son bras.

De plus, l'orientation sensiblement verticale du levier réduit au minimum l'angle de cassure du poignet du conducteur.

Grâce à la conception selon l'invention, le bâti du dispositif 10 est reporté globalement vers l'avant dans l'habitacle tout en conservant à l'extrémité supérieure du levier de changement de vitesse une trajectoire sensiblement horizontale et favorable du point de vue ergonomique.

## Revendications

1. Dispositif (10) de commande d'une boîte de vitesses de véhicule automobile, du type comportant un levier (36) de changement de vitesse, un premier (46) et un second (44) organe de transmission des mouvements du levier (36), un support (28) qui est monté pivotant, autour d'un axe longitudinal (A1) sensiblement horizontal, sur un bâti (14) du dispositif solidaire de la caisse du véhicule, du type dans lequel le levier (36) est articulé par rapport au support pivotant (28), autour d'un axe transversal d'articulation (A2) sensiblement horizontal, dans lequel le support pivotant (28) agit directement sur le second organe de transmission (44) par l'intermédiaire d'un bras (56) du support (28) dont une extrémité transversale (54) est reliée à une extrémité libre (52) de ce second organe (44), et dans lequel le levier de changement de vitesse (36) agit sur une extrémité libre (62) du premier organe de transmission (46) par l'intermédiaire d'un organe (66) monté tournant autour d'un axe de rotation (A3) perpendiculaire à l'axe (A1) de pivotement du support, caractérisé en ce que ledit organe est un basculeur (66) qui monté tournant par rapport au bâti (14), et en ce que le levier (36) de changement de vitesse agit sur le basculeur (66) par l'intermédiaire d'une barre d'actionnement (82) dont l'extrémité arrière (84) est reliée au levier (36) et dont l'extrémité avant (80) est reliée au basculeur (66).

2. Dispositif de commande selon la revendication 1, caractérisé en ce que les deux organes de transmission (44, 46) sont, au voisinage de leurs dites extrémités libres (52, 62), orientés sensiblement verticalement, et en ce que leurs extrémités libres sont situées transversalement d'un même côté par rapport à un plan vertical (PV) passant par l'axe (A1) de pivotement du support (28).

3. Dispositif de commande selon l'une quelconque des revendications précédentes, caractérisé en ce que le basculeur (66) est monté tournant sur le bâti (14) autour d'un axe transversal de rotation (A3) qui est sensiblement concourant avec l'axe (A1) de pivotement du support (28).

4. Dispositif de commande selon l'une quelconque des revendications précédentes, caractérisé en ce que le basculeur (66) comporte une branche d'actionnement (64) qui s'étend longitudinalement vers l'arrière depuis l'axe de rotation (A3) du basculeur (66) et dont l'extrémité libre est reliée à l'extrémité libre (62) du premier organe de transmission (46).

5. Dispositif de commande selon l'une quelconque des revendications précédentes, caractérisé en ce que le basculeur (66) comporte une branche de commande (68) qui s'étend sensiblement verticalement vers le haut à partir de l'axe (A3) de rotation du basculeur (66) et dont l'extrémité supérieure libre est reliée à l'extrémité libre avant (80) de la barre d'actionnement (82) dont l'extrémité libre arrière (84) est reliée au levier de changement de vitesse (36) en un point (CR4) situé verticalement entre l'axe (A2) d'articulation du levier (36) sur le support pivotant (28) et l'extrémité supérieure (40) du levier de changement de vitesse (36).

6. Dispositif de commande selon l'une quelconque des revendications précédentes, caractérisé en ce que le point de liaison (CR1) de l'extrémité libre (52) du second organe de transmission (44) avec le bras (56) du support (28) est situé sensiblement sur l'axe (A2) transversal d'articulation du levier de changement de vitesse (36) sur le support.

7. Dispositif de commande selon l'une quelconque des revendications précédentes, caractérisé en ce que les deux extrémités avant (80) et arrière (84) de la barre d'actionnement (82) sont reliées respectivement au basculeur (66, 68) et au levier de changement de vitesse (36) par des articulations à rotule (R3, R4).

8. Dispositif de commande selon l'une quelconque des revendications précédentes, caractérisé en ce que les extrémités libres (62, 52) des premier (46) et second (44) organes de transmission de mouvement sont reliées respectivement au basculeur (66, 64) et au bras (56) du support pivotant (28) par des articulations à rotule (R2, R1).

9. Dispositif de commande selon l'une quelconque des revendications précédentes, caractérisé en ce que de mouvements transversaux (S) du levier (36) correspondent à la sélection d'une ligne de rapports de vitesse, et en ce que de mouvements longitudinaux (P) du levier correspondent à un passage d'un rapport de vitesse.

10. Dispositif de commande selon l'une quelconque des revendications précédentes, caractérisé en ce que les organes (44, 46) de transmission des mouvements du levier sont des câbles gainés, et en ce que les gaines de câble prennent appui contre une partie inférieure (22) du bâti (14) du dispositif (10).

11. Dispositif de commande selon l'une quelconque des revendications précédentes, caractérisé en ce qu'il est du type dans lequel le bâti (14) comporte une embase (22) de fixation du dispositif sur la caisse du véhicule de manière que le levier de changement de vitesse (36) s'étende sensiblement verticalement à l'intérieur de l'habitacle, et de manière que les tronçons d'extrémités libres (52, 62) des deux organes de transmission de mouvement s'étendent sensiblement verticalement au niveau de l'embase (22).
